(19) Europäisches Patentamt
European Patent Office
Office européen des brevets

(11) Veröffentlichungsnummer: **0 284 871**
**B1**

(12) **EUROPÄISCHE PATENTSCHRIFT**

(45) Veröffentlichungstag der Patentschrift: **11.07.90**

(51) Int. Cl.5: **C10M 107/50**
// C10N40:00

(21) Anmeldenummer: **88104054.7**

(22) Anmeldetag: **15.03.88**

(54) **Tieftemperaturschmieröl.**

(30) Priorität: **28.03.87 DE 3710423**

(43) Veröffentlichungstag der Anmeldung:
**05.10.88 Patentblatt 88/40**

(45) Bekanntmachung des Hinweises auf die Patenterteilung:
**11.07.90 Patentblatt 90/28**

(84) Benannte Vertragsstaaten:
**AT BE DE FR GB IT NL SE**

(56) Entgegenhaltungen:
**DE-A- 1 769 094**
**DE-A- 2 834 172**
**FR-A- 1 479 161**
**FR-A- 2 483 437**

(73) Patentinhaber: **BAYER AG,**
**D-5090 Leverkusen 1 Bayerwerk(DE)**

(72) Erfinder: **Steinbach, Hans-Horst, Dr., Im Birkelshof 1,**
**D-5060 Bergisch-Gladbach 2(DE)**
Erfinder: **Ackermann, Jürgen, Dr., Starenweg 17,**
**D-5060 Bergisch-Gladbach 2(DE)**
Erfinder: **Schlak, Ottfried, Dr., Kalkweg 2,**
**D-5000 Köln 80(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 284 871 B1

## Beschreibung

Die vorliegende Erfindung betrift ein Tieftemperaturschmieröl auf Basis von Fluorsiloxanen.

Die industrielle Kälteerzeugung im Tieftemperaturgebiet bis ca. -110°C hat sich in den vergangenen Jahren stark ausgeweitet. Ein beträchtlicher Anteil entfällt hierbei auf Laboreinrichtungen, Kryostate und Prüfkammern für Werkstoffuntersuchungen im Tieftemperaturbereich. Aber auch in der Medizin, Chemie und Verfahrenstechnik sowie bei der Stahlvergütung werden Kälteanlagen für den erwähnten Temperaturbereich in zunehmendem Umfang und auch für größere Leistungen benötigt.

Als Schmiermittel in Kälteanlagen dienten lange Zeit einfache Mineralöle oder normale naphthenische Öle, die jedoch in vieler Hinsicht (keine extreme Temperaturbelastbarkeit, stark wechselnde Viskosität) nicht befriedigen konnten.

Halbsynthetische Öle, vollsynthetische Alkylaromaten, Poly-α-olefine brachten weitere Verbesserungen. Synthetische Flüssigschmiermittel auf chemischer Basis, die sich vom Mineralöl entfernten, z.B. Butylester von Polykieselsäuren, waren die konsequente Folge dieser Entwicklung. Derartige Flüssigkeitsschmiermittel zeigen jedoch eine gewisse Hydrolyseempfindlichkeit, die bei Wasserzutritt zum Gelieren des Schmiermittels führen kann.

Organopolysiloxane als Schmiermittel zu verwenden, wäre ein Ausweg, um die Hydrolyseempfindlichkeit zu umgehen. Es ist aber allgemein bekannt, daß z.B. Dimethylpolysiloxane an sich schlechte Schmiermittel darstellen, ob wohl ihr Viskositätstemperaturverhalten Vorteile für ein Flüssigschmiermittel in Tieftemperaturanlagen bieten könnte.

Phenyl-, Halophenyl- und Trifluorpropyl-substituierte Siloxane zeigen zwar gute Schmiereigenschaften, aber gegenüber Dimethylpolysiloxanen ein schlechtes Viskositätstemperaturverhalten (vgl. J. of Chem. and Engng. Data 6 (1961), 155). Solche Siloxane fanden zwar Verwendung bei der Herstellung von Hochtemperatur-Schmierfetten, aber nicht als Tieftemperatur-Schmiermittel.

Aus der US-PS 3 642 626 sind ebenfalls Schmiermittel bekannt, die in einem sehr weiten Temperaturbereich beständig sind. Dabei handelt es sich um polymere Fluorsilicone mit relativ hohen Polymerisationsgraden, die wegen der hohen Viskosität bei niedrigen Temperaturen als Tieftemperatur-Schmiermittel keine Verbesserung bringen; zudem ist ihre Hersteellung kompliziert und aufwendig.

Um diesem Problem zu entgehen, wurde in der DE-OS 27 50 980 ein fluorhaltiges Siloxan der allgemeinen Formel

$R_FR_2SiOSiR_2R_F$

vorgeschlagen, bei dem

$R_F$ den Rest $C_nF_{2n+1}$ -$CH_2$-$CH_2$- (n = 1-12) bedeutet.

Dieses Öl kann allein oder gegebenenfalls im Gemisch mit an sich bekannten Schmiermitteln eingesetzt werden.

Bei der technischen Erprobung dieser Substanz hat sich gezeigt, daß dieses Öl sowohl zur Herstellung von Tieftemperatur-Schmiermitteln als auch zur Herstellung von Fetten gemäß DE-OS 1 769 094 Vorteile aufweist. Dieses Tieftemperatur-Schmiermittel hat aber eine niedrige Ausgangsviskosität, die es für manche Anwendungen ungeeignet macht. Es hat sich nämlich gezeigt, daß Schmieröle benötigt werden, die bevorzugt in der Viskositätsklasse ISO VG 46 vorliegen müssen. Das heißt, daß sie kinematische Viskositäten zwischen 41,4 bis 50,6 mm²/sec bei 40°C aufweisen.

Gegenstand der vorliegenden Erfindung ist nun ein Schmiermittel auf Basis von Fluorsiloxanen, dadurch ge kennzeichnet, daß sie aus Verbindungen der allgemeinen Formel

$T_a M_b D^F_c D_d$

bestehen, wobei

T für Alkyltrisiloxygruppen, insbesondere Methyltrisiloxygruppen,

M für Trialkylmonosiloxygruppen, insbesondere Trimethylsiloxygruppen,

D für Dialkyldisiloxygruppen, insbesondere Dimethyldisiloxygruppen, und

$D^F$ für Alkyldisiloxygruppen, insbesondere Methyldisiloxygruppen mit einem fluorierten Rest $C_nF_{2n+1}$ -$CH_2$-$CH_2$- (n = 2 - 10) stehen und

wobei

a Werte von 1 - 5,

b Werte von 3 - 7,

c Werte von 3 - 7 und

d Werte von 30 - 70

annehmen kann.

Es hat sich herausgestellt, daß Verbindungen der allgemeinen Formel

$T_a M_b D^F_c D_d$

in dem T eine

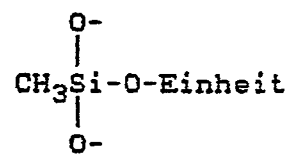

M =

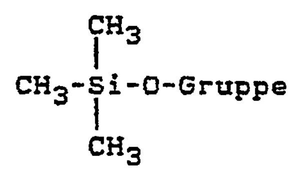

D =

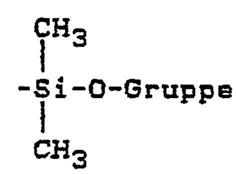

$D^F$ =

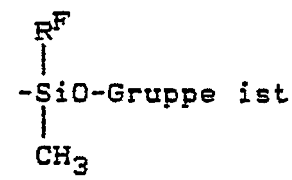

ganz besondere Vorteile bietet, wenn
a vorzugsweise etwa 3,
b vorzugsweise etwa 5,
c vorzugsweise etwa 5 und
d vorzugsweise etwa 50 beträgt.

Es handelt sich dabei um ein verzweigtes Dimethylpolysiloxanöl mit allen Vorteilen der Silicone, als da sind hohe Temperaturbeständigkeit, geringe Viskositätsabhängigkeit von der Temperatur, physiologische Unbedenklichkeit. Dieses Öl hat aufgrund der $R^F$-Gruppen, bei denen es sich um $-CH_2-CH_2 C_nF_{2n+1}$ handeln kann und bei denen n Werte zwischen 2 und 10 annehmen, hervorragende Löslichkeit in Kältemitteln (z. B. in R 12, R 13, R 502 oder R 503).

So konnte bei diesen Kältemitteln selbst bis zu tiefen Temperaturen von -110°C keine Mischungslücke mit den Kältemitteln gefunden werden. Die Kältefließfestigkeit im U-Rohr DIN 51 568 liegt under -80°C. Bei -92°C liegt der Stockpunkt DIN 430 3016. Er reicht aus, um unter Kältemitteldampfdruck mit geringen Mengen an flüssigem Kältemittel selbst bei Temperaturen von -110°C, flüssig zu bleiben.

Die Schmiereigenschaften dieser Öle sind ganz vorzüglich geeignet für Kältekompressoren. Die Bestimmung der Druckfestigkeit im Vierkugelapparat (DIN 51 350) zeigte die Schweißkraft von 1800 N.

Die Prüfung der Schmiereigenschaften im Almen Wieland-Test zeigten an der Belastungsgrenze eine Schweißkraft von 6500 bis 8000 N, eine Reibungskraft von 2000 bis 3000 N bei der Temperatur von 69°C.

Der Reichert-Verschleißtest bei 15 N Belastung zeigte eine Verschleißmarke von 12 - 14 $mm^2$ und eine spezifische Belastbarkeit von 23 $N/mm^2$.

Besonders interessant erscheint der Viskositätsindex (ISO 2909). Er liegt bei 350. Der Wassergehalt (DIN 51 777) liegt unter 30 ppm. Als weitere Vorteile sind erwähnenswert:

- Hydrolyse-, Temperatur- und Alterungsbeständigkeit
- nicht korrosives Verhalten
- entschäumende Eigenschaften
- nicht schlammbildend
- kein Quellen von Dichtungsmaterial (Ausnahme sind Silicondichtungen)

Wie dieses Beispiel der geprüften Eigenschaften oben gekennzeichneter Öle überraschend gezeigt hat, sind die genannten Schmiermittel hervorragend für den gewünschten Zweck geeignet. Sie weisen eine nur geringe Temperaturabhängigkeit der Viskosität auf, besitzen einen sehr niedrigen Stockpunkt bei hervorragenden Schmiereigenschaften. Auch die an ein Tieftemperaturschmiermittel zu stellende Forderung der guten Löslichkeit in Kältemitteln wird von den erfindingsgemäßen Schmiermitteln erfüllt.

Die Herstellung der erfindungsgemäßen Schmiermittel erfolgt in an sich bekannter Weise durch einfache Anlagerung von Fluoralkenen an Si-H-haltige Chlorsilane, Abtrennung der gebildeten fluoralkylsubstituierten Silane, Hydrolyse von entsprechenden Mengen fluoralkylsubstituierten Silanen mit einer Mischung entsprechender Mengen (je nach gewünschten Werten für a, b, c und d) Methyltrichlorsilan, Trimethylmonochlorsilan und Dimethyldichlorsilan in einem geeigneten inerten Lösungsmittel, vorzugweise Toluol.

Anschließend erfolgt eine Äquilibrierung mit starken Äquilibrierungskatalysatoren wie z. B. Schwefelsäure, um eine enge Molekulargewichtsverteilung zu erhalten. Das Endprodukt wird neutralisiert (vorzugsweise mit Soda), im Vakuum ausgeheizt und filtriert.

Die Erfindung soll anhand des folgenden Beispiels noch näher erläutert werden.

Beispiel

Eine Mischung von 1,47 kg Trimethylmonochlorsilan, 17,47 kg Dimethyldichlorsilan, 1,21 kg Methyltrichlorsilan und 6,22 kg $C_6F_{13}(CH_2)_2 Si(CH_3)Cl_2$ (99 %ig) werden allmählich bei einer Temperatur von 35°C in 60 l Wasser unter starkem Rühren zugegeben. Die Temperatur wird durch starkes Kühlen, gegebenenfalls Eiswasser, niedrig gehalten (unter 35°C). Nach beendetem Zulauf wird 1 1/2 Stunden gerührt und zur besseren Phasentrennung 6 l Toluol zugegeben.

Man trennt die untere Phase ab, wäscht die lösungsmittelhaltige Siloxan-Phase zweimal jeweils 15 Minuten mit frischem Wasser unter Rühren. Durch Aufheizen auf 50°C entfernt man das Lösungsmittel als Destillat.

Die Siloxanphase wird mit 25 ml $H_2SO_4$ konz. versetzt und bei 50 - 60°C/40 mbar kondensiert. Dabei wird während 2 Stunden das anfallende Wasser abdestilliert.

Durch Zugabe von Wasser wird die $H_2SO_4$ entfernt und zweimal gewaschen. Schließlich werden 110 g ZnO zugegeben und 1 Stunde lang nachgerührt. Das ZnO sowie die mit ihm umgesetzten Säuren werden über Filterhilfsmittel unter Druck abfiltriert. Das erhaltene Öl wird bei 150°C/1 mbar angeheizt. Das Produkt wird auf eine Viskosität von 40 - 50 $mm^2/sec$ (bei 40°C) mit Chargen höherer oder niedrigerer Viskosität eingestellt.

Das Produkt entspricht etwa der Zusammensetzung
$T_3 M_5 D^F{}_5 D_{50}$.

Der Brechungsindex beträgt 1,39, der Viskositätsindex ca. 350; ebenso entsprechen die anderen Eigenschaften den genannten Spezifikationen.

## Patentansprüche

1) Schmiermittel auf Basis von Fluorsiloxanen, dadurch gekennzeichnet, daß sie aus Verbindungen der allgemeinen Formel
$T_a M_b D^F{}_c D_d$
bestehen, wobei
T für Alkyltrisiloxygruppen, insbesondere Methyltrisiloxygruppen,
M für Trialkylmonosiloxygruppen, insbesondere Trimethylsiloxygruppen,
D für Dialkyldisiloxygruppen, insbesondere Dimethyldisiloxygruppen, und
$D^F$ für Alkyldisiloxygruppen, insbesondere Methyl-

disiloxygruppen mit einem fluorierten Rest $C_nF_{2n+1}$ - $CH_2$-$CH_2$- (n = 2 - 10) stehen und wobei
a Werte von 1 - 5,
b Werte von 3 - 7,
c Werte von 3 - 7 und
d Werte von 30 - 70
annehmen kann.

2) Schiermittel gemäß Anspruch 1, dadurch gekennzeichnet, daß die Werte für
a etwa 3,
b etwa 5,
c etwa 5 und
d etwa 50 betragen.

## Claims

1. Lubricants based on fluorosiloxanes, characterized in that they consist of compounds corresponding to the following general formula
$T_a M_b D^F_c D_d$
Tin which
T represents alkyl trisiloxy groups, more especially methyl trisiloxy groups,
M represents trialkyl monosiloxy groups, more especially trimethyl siloxy groups,
D represents dialkyl disiloxy groups, more especially dimethyl disiloxy groups,
$D^F$ represents alkyl disiloxy groups, more especially methyl disiloxy groups containing a fluorinated unit $C_nF_{2n+1}$ –$CH_2$–$CH_2$ (n = 2–10), and
a may assume values of 1 to 5,
b may assume values of 3 to 7,
c may assume values of 3 to 7 and
d may assume values of 30 to 70.

2. Lubricants as claimed in claim 1, characterized in that
a has a value of approximately 3,
b has a value of approximately 5,
c has a value of approximately 5 and
d has a value of approximately 50.

## Revendications

1. Lubrifiants à base de fluorosiloxanes, caractérisés en ce qu'ils sont constitués de composés de formule générale
$T_a M_b D^F_c D_d$
dans laquelle
T désigne des groupes alkyltrisiloxy, notamment des groupes méthyltrisiloxy,
M représente des groupes trialkylmonosiloxy, notamment triméthylsiloxy,
D représente des groupes dialkyldisiloxy, notamment diméthyldisiloxy, et
$D^F$ désigne des groupes alkyldisiloxy, notamment des groupes méthyldisiloxy portant un reste fluoré $C_nF_{2n+1}$ –$CH_2$–$CH_2$– (n = 2–10) et
a peut avoir des valeurs de 1 à 5,
b peut avoir des valeurs de 3 à 7,
c peut avoir des valeurs de 3 à 7 et
d peut avoir des valeurs de 30 à 70.

2. Lubrifiants suivant la revendication 1, caractérisés en ce que les valeurs peuvent être
d'environ 3 pour a,
d'environ 5 pour b,
d'environ 5 pour c et
d'environ 50 pour d.